# EUROPEAN PATENT APPLICATION

(11) **EP 0 687 119 A1**
(43) Date of publication of application: **13.12.1995**
(21) Application number: 95106345.2
(22) Date of filing: 27.04.1995
(51) Int. Cl.: H04Q 9/00

(54) **Passive transponder, particularly for an automatic radio-frequency identification system**

(30) Priority: 06.06.1994 IT BO940266
(71) Applicant: DATALOGIC S.P.A., I-40012 Lippo di Calderara di Reno (Bologna) (IT)
(72) Inventor: Calari, Umberto, I-40138 Bologna (IT)
(74) Representative: Modiano, Guido, Dr.-Ing.

(57) **Abstract**

A passive transponder, particularly for an automatic radio-frequency identification system, which comprises: means (1) for receiving/transmitting a radio signal transmitted by a reader; power supply means (3) associated with the receiving/transmitting means (1) and suitable to extract electric power from the radio signal; means (4) for generating a synchronization signal acquired from the radio signal which are associated with the receiving/transmitting means (1); means (5,11) for generating a coded signal which are suitable to transmit the code to the reader by means of the receiving/transmitting means (1); characterized in that it comprises configuration means (6,7,8,9,10) for selecting at least one characteristic transmission parameter in the signal generated by the generator means. This transmission parameter can be the frequency of the carrier of the coded signal, the bitrate of the coded signal, or the length whereof.

## Description

The present invention relates to a passive transponder, particularly for an automatic radio-frequency identification system (better known as RF ID system).

It is known that passive RF ID systems consist of a reader and of a transponder. The reader generates a sinusoidal electromagnetic field at a constant frequency, which is commonly known as excitation frequency and can range, in known systems, from a hundred KHz to several MHz. This e.m. field supplies the transponder, which, once it has entered this field, transmits to the reader a signal containing the code stored in said transponder. The reader is thus capable of receiving and acquiring said signal arriving from the transponder.

In known systems, the signal transmitted by the transponder to the reader consists of a carrier the frequency whereof is different from the excitation frequency and is modulated by the code. Said code is stored in a non-volatile memory of the transponder, which can be programmed only once (for example a fuse memory) or can be reprogrammed several times (EEPROM memory).

It should be noted that as long as passive transponders are supplied by the e.m. field, they transmit the code continuously without interruption. In order to allow the reader to synchronize with the beginning of the code, it is known to transmit, before each code, a unique bit sequence which cannot be duplicated within the code itself. This sequence is commonly termed preamble or synchronization sequence.

An example of an RF ID system is described in application PCT WO 85/03831, published on August 29, 1985.

The transponders of known systems are based on custom integrated circuits, generally known as ASIC (Application Specific Integrated Circuit), which integrate most of the electronics of the transponder. This method entails large initial investments and no flexibility in the circuitry after manufacture, but also ensures low per-component cost.

In particular, this leads to the fact that in known systems the transponder transmits a fixed number of code bits at a fixed bit rate and uses a carrier the frequency whereof is also fixed and unchangeable.

The fixed code length has the drawback of preventing the transponder from adapting to different automatic identification applications: in fact some applications require a high reading rate, whereas in others a large number of code bits is more important. Of course, as the number of bits decreases, the code is transmitted in less time and therefore reading is faster.

The fixed bit rate also has a similar drawback: an increase in the bit rate in fact typically entails a decrease in the maximum reading distance between the reader and the transponder and vice versa. Accordingly, transponders with a low bitrate will have a great reading distance but will not adapt to applications in which the transmission rate is important even if distance performance is affected.

Finally, the fixed carrier frequency, typically linked to the excitation frequency, also has a drawback. According to the various RF transmission standards applicable in various countries, which set clearly defined and different frequency limits, RF systems can be characterized by excitation frequencies ranging from a hundred KHz to a few MHz. In such different situations, the optimum ratio between the excitation frequency and the answering carrier frequency, which arises from a compromise between receiver simplicity and transmission efficiency, is not constant.

Another drawback of known transponders is that they have either a memory that can be reprogrammed unlimited times, which is useful from the point of view of flexibility, or a memory that can be programmed only once, which is instead required for security applications. A transponder based on one of these two types of memory is unable to meet both the flexibility requirements and the security requirements.

In known systems, in which the electronics of the transponder is typically integrated in an ASIC, the possibility to adapt to the above mentioned multiple fields of application can be solved only by providing multiple ASICs, one for each particular requirement. In practice, this solution is unacceptable due to the consequent expenditures in terms of money and time.

The aim of the present invention is to provide a passive transponder, particularly for an automatic radio-frequency identification system, which is capable of transmitting a data signal the transmission parameters whereof can vary according to the application requirements.

Another object of the present invention is to provide a transponder for transmitting a data signal, the carrier frequency whereof can be selected among one or more frequencies.

Another object of the present invention is to provide a transponder which is capable of transmitting a data signal at a bitrate that can be selected among one or more different bitrates.

Another object of the present invention is to provide a transponder which is capable of transmitting a data signal the code length whereof can be selected among one or more different lengths.

Another object of the present invention is to provide a transponder provided with memory means that meet flexibility and security requirements.

Another object of the present invention is to provide a transponder with a synchronization sequence (preamble) constituted by a specific bit sequence.

Another object of the present invention is to provide a device which is highly reliable, relatively easy to manufacture, and at competitive costs.

With this aim and these objects in view, there is provided, according to the present invention, a passive transponder, particularly for an automatic radio-frequency identification system, comprising: means for receiving/transmitting a radio signal transmitted by a reader; power supply means associated with said receiving/transmitting means and suitable to extract electric power from said radio signal; means for generating a synchronization signal acquired from said radio signal which are associated with said receiving/transmitting means; means for generating a coded signal adapted to transmit said code to said reader by means of said receiving/transmitting means; characterized in that it comprises configuration means adapted to select at least one characteristic transmission parameter in the signal generated by said generator means.

The characteristics and advantages of the invention will become apparent from the following description of a preferred but not exclusive embodiment thereof, illustrated only by way of non-limitative example in the accompanying drawings, wherein:
figure 1 is a block diagram of the transponder according to the present invention;
figure 2 is a circuit diagram of the rectifier of the transponder according to the present invention;
figure 3 is a circuit diagram of the synchronization (clock) signal extractor of the transponder according to the present invention;
figure 3a plots the corresponding waveforms of the extractor of figure 3;
figure 4 is a circuit diagram of the transmission interface of the transponder according to the present invention;
figure 5 is a circuit diagram of the serial converter and of the generator of the synchronization sequence (preamble) of the transponder according to the present invention;
figure 6 is a circuit diagram of the modulator of the transponder according to the present invention;
figure 6a plots the waveforms related to the modulator of figure 6;
figure 7 plots the waveforms related to the programming of the transponder according to the present invention;

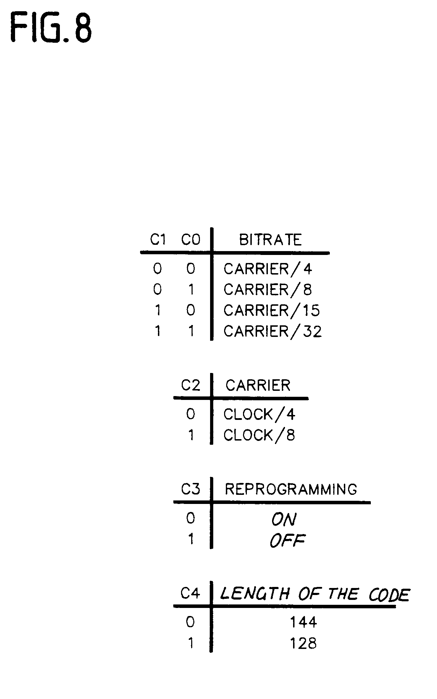

figure 8 is a table of the possible configurations of the transponder according to the present invention;
figure 9 is a circuit diagram of the control logic of the transponder according to the present invention;
figure 9a is a circuit diagram of the two-to-one multiplexer of the control logic of figure 9.

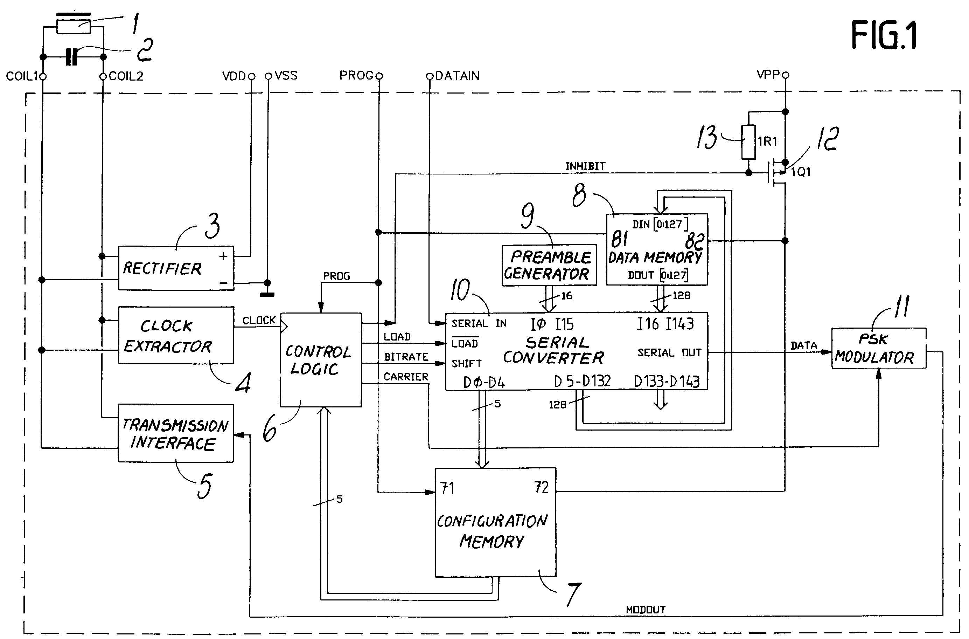

Figure 1 is a general block diagram of the transponder, illustrating, in dashed lines, the electronics optionally integratable in an ASIC. The capacitor 2 and the coil 1 are parallel-connected to this part by means of the terminals COIL 1 and COIL 2.

The coil 1 couples inductively to the signal transmitted by the reader and transfers energy to the circuit. The capacitor 2 optimizes energy transfer to the transponder at the excitation frequency of the signal transmitted by the reader.

As shown in figure 1, the three blocks 3, 4, and 5 that interface with the digital part of the transponder are connected to the two terminals COIL1 and COIL2 of the coil 1.

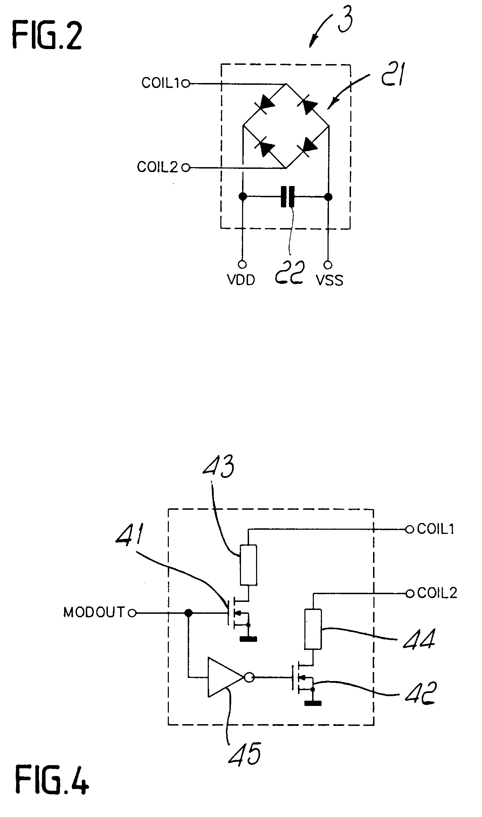

The block 3 is the rectifier providing the direct-current voltage required for the power supply by rectifying the sinusoidal signal which is generated by the reader and is captured by the inductive coupling, constituted by the coil 1 and by the capacitor 2. This operation is performed with a simple diode bridge 21 and a filtering capacitor 22, as shown in figure 2. The output of the rectifier 3 is constituted by two power supply terminals VDD and VSS that supply the entire transponder.

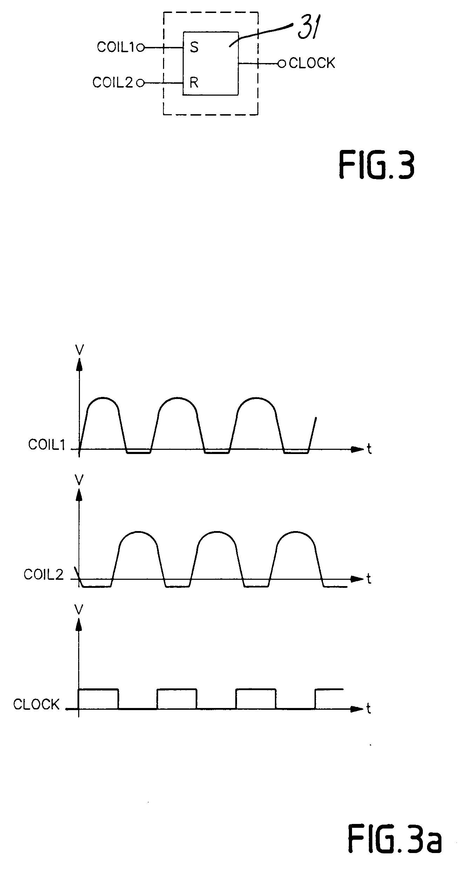

The block 4 is the clock extractor that extracts the synchronization signal CLOCK, the frequency whereof is identical to the excitation frequency of the reader, and is provided by means of a set/reset flip-flop 31, shown in figure 3.

The block 5 is the transmission interface, which is driven by the modulated signal MODOUT generated by the digital part, and drains current alternately from the two sides of the coil 1, so as to add to the excitation current generated by the reader a current signal proportional to the signal MODOUT.

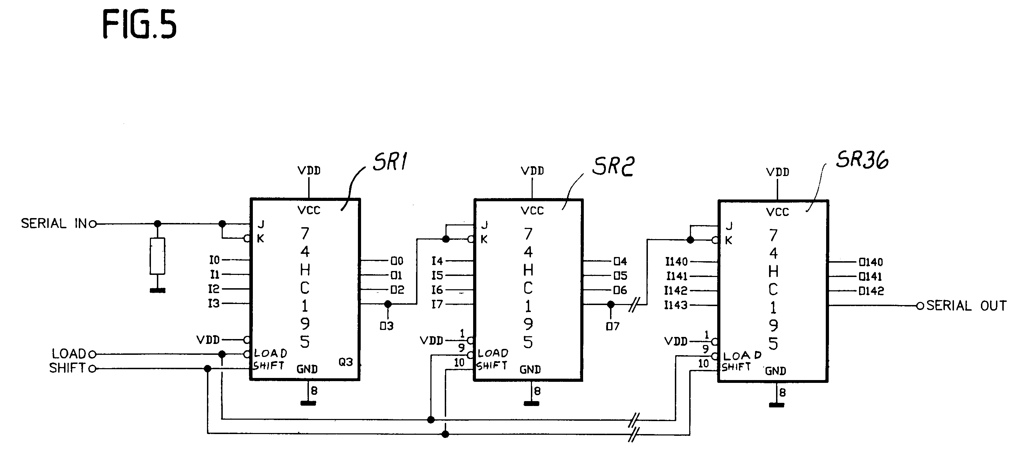

The execution of the interface 5 is shown in figure 4. The terminals COIL1 and COIL2 are connected respectively, by means of the resistors 43 and 44, to the drain terminals of first and second N-channel MOSFET transistors 41 and 42. The source terminals of the transistors 41 and 42 are connected to the ground. The signal MODOUT is sent directly to the gate of the transistor 41, whereas said signal is inverted by an inverter 45 before it is sent to the gate of the transistor 42.

The reader, by means of the inductive coupling, can in turn detect the signal that is the result of the sum of the excitation current generated by the reader and of the current signal proportional to MODOUT, and thus acquire the code transmitted by the transponder.

The control logic of the block 6 of figure 1 generates four signals: the transmission carrier CARRIER, the synchronization signal BITRATE the frequency whereof is equal to the transmission bitrate, the reprogramming inhibit command (INHIBIT), and finally the load signal (LOAD) of the serial converter 10.

This part will be described in detail hereinafter.

The serial converter 10 is a 144-bit shift register which, in addition to the input SERIAL IN and to the serial output SERIAL OUT, has inputs I0-I143 and parallel outputs D0-D143 as well as the synchronous load command LOAD.

The serial converter 10 can be provided, as shown in figure 5, with 36 cascade-connected type 74HC195 shift registers, and is synchronized by the signal BITRATE produced by the control logic 6. With reference to figure 5, which illustrates only the first shift register SR1, the second one SR2, and the last one SR36, the inputs of each one of the individual shift registers SR1-SR36 constitute four parallel input lines of the serial converter 10. In this way, the first shift register SR1 has the first four inputs I0-I3 of the serial converter 10, the second shift register SR2 has the next four inputs I4-I7, and the last shift register SR36 has the last four inputs I140-I143 of the serial converter 10. Likewise, the outputs (D0-D3; D4-D7;...D140-D143) of the individual shift registers SR1-SR36 constitute the parallel outputs of the serial converter 10.

The input SERIAL IN is connected to the two inputs J and K of the first shift register SR1, whereas in the case of the following shift registers, the output of the highest bit of the previous shift register is connected to the inputs J and K; for example, the output D3 of the first shift register SR1 is connected to the inputs J and K of the second shift register SR2. In the case of the last shift register SR36, the highest bit output D143 constitutes the serial output SERIAL OUT of the serial converter 10.

The signal BITRATE arriving from the control logic 6 is applied to the shift inputs SHIFT of each one of the shift registers SR1-SR36, whereas the load signal LOAD produced by the control logic is applied to each one of the load inputs L of the shift registers SR1-SR36.

The first 16 inputs I0-I15 of the serial converter 10 are connected to a preamble generator 9, whereas the remaining inputs I16-I143, related to the highest bits, are connected to a first data memory 8 that transmits the 128 code bits of the signal transmitted by the transponder.

The five outputs D0-D4 of the serial converter 10 related to the five lowest bits are connected to a configuration memory 7 which in turn, at the appropriate time, transmits a configuration signal to the control logic 6, said signal being composed of five logic configuration signals C0-C4 corresponding to the signals in output from the outputs D0-D4.

The output SERIAL OUT of the serial converter 10 is connected to a modulator 11, typically of the 2-PSK (Phase Shift Keying) type, a signal DATA being transmitted thereto. The modulator 11 also receives the signal of the transmission carrier CARRIER generated by the control logic 6.

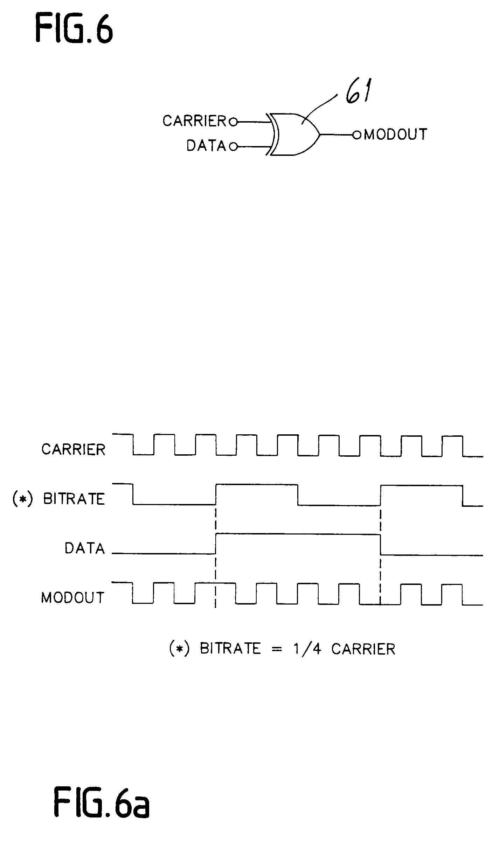

The modulator 11 can be provided according to the diagram of figure 6, in which the signals DATA and CARRIER are connected to the inputs of the XOR logic gate 61, whereas the signal MODOUT is present at the output and is sent to the transmission interface 5.

The data memory 8, typically a non-volatile memory, is characterized by parallel inputs DINO-DIN127 for the datum to be programmed, which originates from the serial outputs D5-D132 of the serial converter 10. As mentioned earlier, the 128 output bits of the data memory 8 are sent to the inputs I16-I128 of the serial converter 10.

The data memory 8 is manufactured using EEPROM technology, so as to allow the reprogramming of said code by means of electric signals applied to the inputs of the transponder.

The memory 8 and the configuration memory 7 are furthermore individually provided with a write command input, designated by the reference numerals 81 and 71 respectively, and with an input, designated by the reference numerals 82 and 72 respectively, for the programming overvoltage VPP.

The programming overvoltage VPP is supplied to the memories 7 and 8 by means of a P-channel MOSFET transistor 12 the gate and the drain terminal whereof are connected by means of a resistor 13. The transistor 12 is driven by the signal INHIBIT generated by the control logic 6.

The transponder has an input for the programming signal PROG which is connected to the inputs for the write commands 71 and 81 of the memories 7 and 8. The PROG input is furthermore connected to the control logic 6.

Another input of the transponder, DATAIN, is used to send the programming data and is connected to the SERIAL IN input of the serial converter 10.

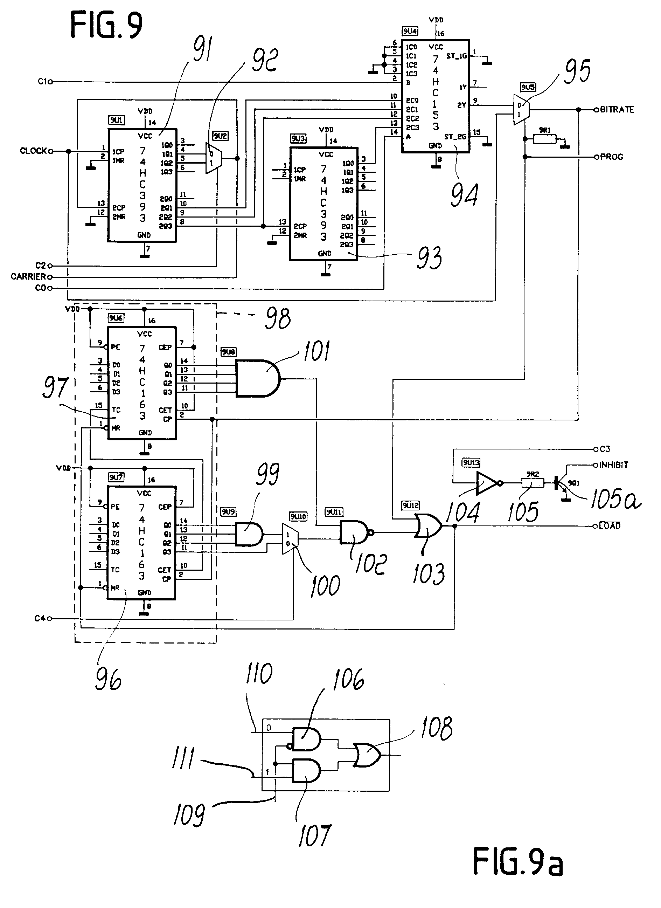

Finally, the control logic 6 is provided as shown in figure 9.

The first section of the control logic 6 generates the transmission carrier CARRIER and the synchronization signal BITRATE.

The signal CLOCK is connected to a first divider 91 to divide said signal CLOCK by 4 and by 8. The two output signals (CLOCK/4 and CLOCK/8) of the divider 91 are sent to a first multiplexer 92 for selecting the transmission carrier CARRIER, said multiplexer being suitable to select the two outputs of the divider 91 by means of the configuration bit C2.

The carrier signal CARRIER is also sent to the first divider 91 to divide it by 4 and by 8, whereas the output signals of the divider are sent to a second divider 93 to divide the signal CARRIER also by 16 and by 32. The four signals related to the signal CARRIER (CARRIER/4, CARRIER/8, CARRIER/16, CARRIER/32) are sent to a second multiplexer 94 of the four-to-one type for selecting the frequency of the transmission carrier. Selection occurs by means of the selection bits C0 and C1. The output of the second multiplexer 94 is connected, together with the signal CLOCK, to a second two-to-one multiplexer 95 which is controlled by the programming signal PROG.

The two-to-one multiplexers 92 and 95 can be provided as shown in figure 9a. The inputs 110 and 111 of the multiplexer are constituted by one of the inputs of two AND gates 106 and 107 respectively. The control line 109 is connected to the inverting input of the first AND gate 106 and to the non-inverting input of the second AND gate 107. The outputs of the gates 106 and 107 are connected to the inputs of an OR gate 108, the output whereof constitutes the output of the multiplexer.

The second section of the control logic generates the load signal LOAD. This section comprises an 8-bit divider 98 composed of two cascade-connected counters 96 and 97. The first three bits (the "lowest" bits) of the counter of the divider 98 (and accordingly also of the counter 96) are connected to the inputs of a first AND logic gate 99, the output whereof is connected to the first input of a two-to-one multiplexer 100. The fourth bit of the divider 98 (and of the counter 96) is connected to the other input of the multiplexer 100. The multiplexer 100 is controlled by the configuration bit C4.

The four highest bits of the divider 98 (the four bits of the counter 97) are sent to the inputs of a second AND gate 101. The outputs of the AND gate 101 and of the multiplexer 100 are connected to the inputs of a NAND gate 102. The output of the NAND gate 102 is connected, together with the signal BITRATE generated by the first section, to an OR gate 103. The (inverted) load signal LOAD is present at the output of the OR gate 103.

The fourth configuration bit C3 is sent to an inverter 104 which drives the transistor 106 across a resistor 105. The collector of the transistor 106 supplies the signal INHIBIT of the control logic 6.

The dividers 91 and 93 can be constituted by 74HC393 integrated circuits; the multiplexer 94 can be constituted by a 74HC153 integrated circuit; and the counters 96 and 97 can be constituted by 74HC163 integrated circuits.

The operation of the transponder according to the present invention is as follows.

The coil 1 couples inductively to the reader and transfers energy to the circuit. The capacitor optimizes the transfer of energy to the transponder at the excitation frequency of the reader.

The rectifier 3 supplies the direct-current voltage required for the power supply of the transponder to the terminals VDD and VSS.

The clock extractor 4 extracts the synchronization signal CLOCK and sends it to the control logic 6. The signal CLOCK and the signals present at the terminals COIL1 and COIL2 are plotted in figure 3a with reference to VSS.

The interface 5, as mentioned earlier, drains current alternately from the two sides of the coil 1, so as to add to the excitation current generated by the reader a current signal proportional to the signal MODOUT.

The control logic 6 generates the signal of the transmission carrier CARRIER, which is sent to the modulator 11; the load signal LOAD, which is sent to the LOAD input of the serial converter 10; the signal BITRATE, which is sent to the SHIFT input of the serial converter 10; and the signal INHIBIT, which is sent, at the appropriate time, to the gate of the transistor 12. The detailed operation of the control logic 6 is described more clearly hereinafter.

The signal LOAD loads from the preamble generator 9 into the serial converter 10 the 16 bits of the fixed preamble in the "low" positions I0-I15 and loads the 128 code bits from the data memory 8 into the "high" positions I16-I143 of the parallel input.

Once the 144 bits have been loaded, the serial converter 10 serializes said bits on the output SERIAL OUT at the rate set by BITRATE, and accordingly generates the signal DATA.

At this point the modulator 11 modulates the carrier CARRIER with the signal DATA according to the 2-PSK (Phase Shift Keying) modulation method. With reference to figure 6, the XOR gate 61 has the signal CARRIER in output on MODOUT when a logic zero value is present on DATA, whereas it has an inverted CARRIER, that is to say CARRIER phase-shifted by 180 degrees, in output when a logic one value is present.

Modulation is accordingly a phase modulation with two levels, wherein the high level of the modulating signal (DATA) corresponds in output to the carrier itself (CARRIER), whereas the low level of the modulating signal corresponds to the carrier phase-shifted by 180 degrees. Reference should be made to the waveforms of figure 6a for better understanding.

As described earlier, the signal MODOUT is then retransferred to the inductive coupling by means of the transmission interface 5.

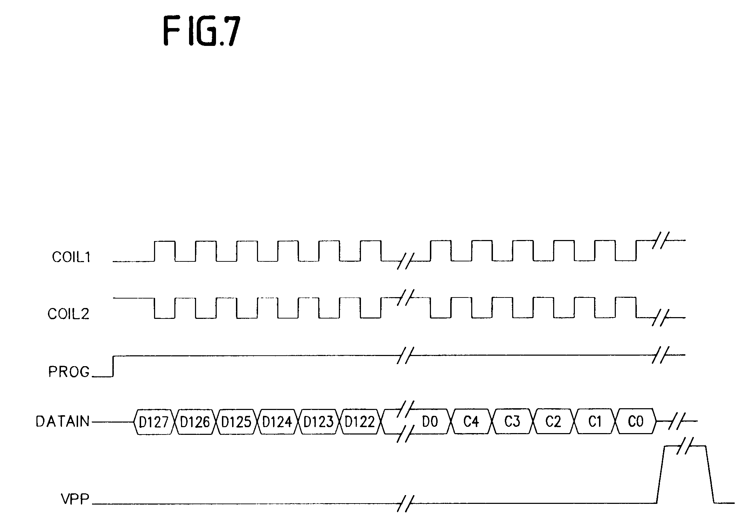

The transponder is programmed by applying adequate stimula to the inputs of the transponder, as shown in figure 7. In particular, it is necessary to supply the circuit by means of VDD and VSS, drive COIL1 and COIL2 with two clocks in phase opposition, keep the PROG signal at VDD, and simultaneously provide a new data bit or configuration bit at each front of the COIL1 signal. The data are serialized on the DATAIN input first and are then followed by the configuration bits.

The inputs COIL1 and COIL2 are the only inputs required for operation and provide, during programming, the synchronization signal for the operation of the logic unit.

The PROG signal must be kept at a high logic value during the programming of the transponder.

After 132 clock pulses on COIL1, all the 128-bit code and all the 5 configuration bits are inside the serial converter and are present on its parallel output. An adequate overvoltage in VPP allows to program the data and configuration memory.

Each EEPROM cell 7 and 8 is characterized by the input for the datum to be programmed, by the output of the stored datum, by the write command 71 and 81, and by the input for the programming overvoltage 72 and 82 respectively. In order to program each cell it is necessary to provide the datum to be programmed on the input of the memories, raise the signal PROG, and force a high voltage pulse (approximately 12-13 V) on the inputs 72 and 82 for a duration of approximately 1 ms. At the end, the cell is programmed with the new value.

The high signal PROG ensures that the synchronization signal BITRATE is identical to the signal CLOCK: programming thus occurs quickly and independently of the configuration that is present. During programming, the first 133 bits of the parallel output of the shift register are used to reprogram the 5 configuration bits, whereas the other 128 bits are used for the code.

Transponder programming necessarily also entails rewriting 5 additional bits C0-C4 of EEPROM contained in the memory 7: said bits, known as configuration bits, allow to select the variable parameters of the transponder.

In particular, the configuration bits C0-C4 are used to control the control logic 6.

In the control logic 6 (figure 9), the signal CLOCK is divided by 4 and by 8 by the divider 91, whereas the multiplexer 92 selects one of the two divisions by means of the configuration bit C2. Based on the value of this bit, the frequency of the transmission carrier of the transponder can thus be 1/4 or 1/8 of the excitation frequency.

The signal CARRIER is in turn divided by 4, 8, 16, and 32 by the first divider 91 and by the second divider 93. The four signals obtained from the division enter the inputs of the multiplexer 94, which selects the bit rate for transmission, by means of the two configuration bits C0 and C1. During operation, PROG is in fact disconnected and thus set low by the pull-down resistor 112, and accordingly the divider output 94 is present at the output BITRATE of the multiplexer 95. Based on the values of the bits C0 and C1, the transmission bitrate of the transponder can be 1/4, 1/8, 1/16 or 1/32 of the carrier frequency.

The counters 96 and 97 of the counter 98 and the logic gates 99, 100, 101, 102, and 103 decode the state 127 (7Fh) and 143 (8Fh) of said counter. The configuration bit C4 selects one of the two decoding methods, in order to force the serial converter 10 to transmit or not transmit the fixed preamble generated in the preamble generator 9. In fact, in the first case the signal LOAD is activated every 133 pulses of the clock BITRATE and the serial converter is reloaded after transmitting only the code, whereas in the second case it is activated only after every 144 pulses and the shift register is reloaded after transmitting both the code and the preamble.

Finally, the configuration bit C3 drives the MOSFET 12 by means of the inverter 104 and of the open-collector transistor 106 that generates the signal INHIBIT; said MOSFET physically opens the connection between the contact VPP that can be accessed externally and the overvoltage inputs 72 and 82 of the EEPROM cells 7 and 8. Based on the value of the bit C3, it is thus possible to irreversibly disable the reprogramming both of the code and of the configuration of the transponder. The disabling operation is irreversible since it also prevents subsequent modification of said bit C3.

Practical tests have shown that the transponder according to the present invention fully achieves the above mentioned aim and objects.

The invention thus conceived is susceptible of numerous modifications and variations, all of which are within the scope of the inventive concept.

For example, with the transponder according to the present invention it is possible to provide a higher number of values of the carrier frequency (CARRIER) and of the bitrate (BITRATE) with respect to those described.

Finally, all the details may furthermore be replaced with other technically equivalent ones.

In practice, the materials employed, as well as the shapes and dimensions, may be any according to the requirements without thereby abandoning the scope of the protection of the claims that follow.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Passive transponder, particularly for an automatic radio-frequency identification system, which comprises: means (1) for receiving/transmitting a radio signal transmitted by a reader; power supply means (3) associated with said receiving/transmitting means (1) for extracting electric power from said radio signal; means (4) for generating a synchronization signal acquired from said radio signal which are associated with said receiving/transmitting means (1); means (5) for generating a coded signal which are suitable to transmit said code to said reader by means of said receiving/transmitting means (1); characterized in that it comprises configuration means (6,10,7,8) for selecting at least one characteristic transmission parameter in the signal generated by said generator means.

2. Transponder according to claim 1, characterized in that said transmission parameter is the frequency of the carrier of said coded signal.

3. Transponder according to one or more of the preceding claims, characterized in that said transmission parameter is the bit rate (bitrate) of said coded signal.

4. Transponder according to one or more of the preceding claims, characterized in that said transmission parameter is the length of the code.

5. Transponder according to one or more of the preceding claims, characterized in that said configuration means comprise a control logic (6) for generating signals that correspond to said transmission parameters.

6. Transponder according to one or more of the preceding claims, characterized in that said configuration means comprise a serial converter (10) synchronized with a signal that corresponds to said bitrate and suitable to transmit said code to modulation means (11) which modulate said code on a carrier frequency signal generated by said means (5) for generating the coded signal and having the frequency of said carrier frequency.

7. Transponder according to one or more of the preceding claims, characterized in that said serial converter (10) is suitable to transmit a configuration signal to said control logic (6).

8. Transponder according to one or more of the preceding claims, characterized in that said serial converter (10) is suitable to transmit said configuration signal to said control logic (6) by means of a configuration memory (7).

9. Transponder according to one or more of the preceding claims, characterized in that said configuration means comprise a data memory (8) associated with said serial converter (10) and is suitable to memorize and transmit to said serial converter (10) said code of said coded signal.

10. Transponder according to one or more of the preceding claims, characterized in that said configuration means comprise a preamble generator (9) for transmitting a synchronization sequence of the coded signal to said serial converter (10).

11. Transponder according to one or more of the preceding claims, characterized in that said control logic (6) comprises at least one frequency divider (91) for generating at least two of said carrier frequency signals by dividing said synchronization signal.

12. Transponder according to one or more of the preceding claims, characterized in that said control logic (6) comprises at least one frequency divider (94) for generating at least two of said signals that correspond to said bitrate by dividing said carrier frequency signal.

13. Transponder according to one or more of the preceding claims, characterized in that said control logic (6) comprises means (92) for selecting said at least two carrier frequency signals, said selection means being controlled by said configuration signal.

14. Transponder according to one or more of the preceding claims, characterized in that said control logic (6) comprises means (95) for selecting said at least two signals corresponding to said bitrate, said selection means being controlled by said configuration signal.

15. Transponder according to one or more of the preceding claims, characterized in that said logic (6) comprises means (98-105) for generating a signal for loading said serial converter (10) which are suitable to drive said serial converter so that it loads said code from said data memory (8) according to said coding signal.

16. Transponder according to one or more of the preceding claims, characterized in that said logic (6) comprises means (98-105) for generating a signal for loading said serial converter, said means being suitable to drive said serial converter so that it loads said synchronization sequence generated by said preamble generator according to said coding signal.

17. Transponder according to one or more of the preceding claims, characterized in that said serial converter (10) is suitable to load the data of said code and of said configuration signal respectively into said data memory (8) and into said configuration memory (7) during the programming of the transponder.

18. Transponder according to one or more of the preceding claims, characterized in that said data memory (8) and said configuration memory (7) are non-volatile memories, the non-writable state whereof is determined irreversibly by said configuration signal.

19. Transponder according to one or more of the preceding claims, characterized in that said synchronization sequence is constituted by a plurality of consecutive bits having the same logic value, followed by a bit having the opposite logic value.

20. Transponder according to one or more of the preceding claims, characterized in that said data memory (8) and said configuration memory (7) are of the write-once type.

21. Transponder according to one or more of the preceding claims, characterized in that said transponder is manufactured in ASIC technology.

22. LSI integrated circuit, particularly for transponders of the type suitable to transmit a coded signal, upon a feeder interrogation signal originating from an interrogation device, characterized in that it comprises:
two inputs (COIL1, COIL2), to which an antenna coil (1) is connected, said coil being suitable to receive said interrogation/feeder signal and to transmit a coded identification signal;
a rectifier bridge (21) and a filter (22) connected to said inputs for supplying said transponder;
a circuit (4) for generating a clock signal obtained from the frequency of the interrogation signal present on said inputs;
a modulation circuit (11) connected to said two inputs for transmitting said coded identification signal;
a configuration memory (7) of the writable non-volatile type;
a data memory (8) of the writable non-volatile type;
a carrier-frequency generating circuit (6) for generating at least two signals having a frequency that is a submultiple of said clock signal;
a bitrate generating circuit (6) which generates at least two frequencies whose values are submultiples of the value of said carrier frequency;
a preamble generator (9), said preamble consisting of a fixed configuration of N bits which cannot be contained in the succession of the bits of said code;
a serial converter (10) comprising a shift register, with a parallel input and a serial output, the clock signal whereof is constituted by said signal of said bitrate and the output whereof is connected to said modulation circuit and is representative of the coded datum transmitted by said transponder to said interrogating device, said configuration memory (7) being composed of n bits;
at least one of said n bits enabling, according to its state, said carrier frequency;
at least one of said n bits determining the bitrate according to its state.

23. Circuit according to claim 22, characterized in that at least one of said bits of said configuration memory (7) is capable of selecting whether said identification code is composed only of the content of said data memory, in which the configuration of the preamble is also coded, or whether said identification code is constituted by a preamble generated by said preamble generator (9) followed by the contents of said data memory (8), which is entirely reserved for identification data.

24. Circuit according to claim 22, characterized in that the state of one of said bits and of said configuration memory (7) is capable of irreversibly determining the non-writable state of said data and configuration memories.

25. Circuit according to claim 22, characterized in that said data memory (8) and said configuration memory (7) are of the write-once type.

26. Circuit according to claim 22, characterized in that the bit sequence of said preamble generator (9) is 16 bits long, said sequence being constituted by 15 consecutive bits having the same logic value, followed by a bit having the opposite logic value.
